# EUROPEAN PATENT SPECIFICATION

(11) **EP 1 191 854 B1**
(45) Date of publication and mention of the grant of the patent: **31.08.2005**
(21) Application number: 00944110.6
(22) Date of filing: 13.06.2000
(51) Int. Cl.: A23C 19/00

(54) **A PROCESS FOR THE PREPARATION OF POST-HEAT TREATED COTTAGE CHEESE PRODUCTS**
VERFAHREN ZUR HERSTELLUNG VON NACHERHITZTEN HÜTTENKÄSEPRODUKTEN
PROCEDE DE PREPARATION DE PRODUITS FROMAGERS DU TYPE COTTAGE AYANT SUBI UN TRAITEMENT THERMIQUE ULTERIEUR

(30) Priority: 14.06.1999 HU 9901957; 08.11.1999 HU 9904085
(43) Date of publication of application: 03.04.2002
(73) Proprietor: Ditej-Garda Tejfeldolgozo Kft., 1118 Budapest (HU)
(72) Inventor: SZEPLAKI, Zoltán, 1203 Budapest (HU)
(74) Representative: Gardonyi, Zoltanné
(86) International application number: PCT/HU2000/000055
(87) International publication number: WO 2000/076325

(56) References cited:
- EP-A- 0 714 608
- WO-A-96/24254
- US-A- 4 655 127
- PRAJAPATI J P ET AL: "COMPARATIVE QUALITY APPRAISAL OF HEATED SHRIKHAND STORED AT AMBIENT TEMPERATURE" AUSTRALIAN JOURNAL OF DAIRY TECHNOLOGY,AU,DAIRY INDUSTRY ASSN AUSTRALIA, HIGHETT VIC, vol. 47, no. 1, 1 May 1992 (1992-05-01), pages 18-22, XP000273046 ISSN: 0004-9433
- DATABASE WPI Section Ch, Week 198704 Derwent Publications Ltd., London, GB; Class D13, AN 1987-024101 XP002155153 & HU 40 310 A (DORNYEI J), 28 December 1986 (1986-12-28) cited in the application
- DATABASE WPI Section Ch, Week 199803 Derwent Publications Ltd., London, GB; Class D13, AN 1998-021688 XP002155154 & HU 75 387 A (ACS T), 28 May 1997 (1997-05-28) cited in the application
- DATABASE FSTA [Online] INTERNATIONAL FOOD INFORMATION SERVICE (IFIS), FRANFURT/MAIN, DE; CHUBANOVA A V ET AL: "New lactic cheese." Database accession no. 76-4-04-p0724 XP002155152 & MOLOCHNAYA PROMYSHLENNOST' 1975 BELORUSSKII FILIAL VSES. NAUCHNO-ISSLED. INST. MOLOCHNOI PROMYSHLENNOSTI, USSR,

## Description

The invention relates to a process for the preparation of post-heat treated cottage cheese products. More particularly, the invention relates to a continuous process for the preparation of products that can be stored for a prolonged period.

### BACKGROUND OF THE INVENTION

In the most frequently used technologies for the preparation of cottage cheese desserts, cottage cheese is mixed with spices and treated at a temperature of 65-70°C in a double-wall vessel equipped with a high shear force mixer or in a heatable rotating disc agitator, then it is suddenly cooled down, formed and packed. In the case of compositions prepared this way a shelf life of 20 days at most is guaranteed.

There are attempts known for increasing the shelf-life. In the Hungarian patent application No. HU-642/85 e. g. a vacuum cooling is suggested after the post-heat treatment. On the effect of the vacuum treatment the composition loses a significant amount of its liquid content and the concomitant heat loss results in the quick and steady cooling down of the product. A specific disadvantage of this method is that vacuum cooling requires a significant amount of energy.

Another solution is disclosed in the Hungarian patent application No. HU-P9500701 according to which the quick cooling down after the post-heat treatment is carried out by the aid of liquid nitrogen. A specific disadvantage of this process is the use of the liquid nitrogen making the process significantly more expensive, further, the process is complicated and difficult to operate.

EP 714 608 discloses methods to process soft cheese where the product is heated and cooled after having been formed and US 4 655 127 disclose methods for the continuous production of cottage cheese.

According to the processes used both in the every day practice and in the patent applications cited above the post-heat treatment of cottage cheese is carried out in heatable-coolable vessels, in so-called cutters, while agitating the material with high shear force. The high shear force agitation makes the cottage cheese overpulpified. Further, it is known that the batchwise heating up and cooling down of the producing facilities requires very much energy. A further drawback of the batchwise processes is that it is difficult to ensure a steady quality thereby. In the case of the composition in question, i. e. in the case of producing a cottage cheese dessert, a further significant drawback emerges: the possibility of re-infection when the semifinished product is introduced into another vessel.

The increasing demands of the market require a steady quality and a longer shelf-life, while the decrease of the production costs is an economical requirement.

Searches have been carried out to elaborate a process which eliminates the above drawbacks and fully complies with the above requirements.

The invention is based on the recognition that if the cottage cheese product is prepared under aseptic circumstances by a continuous process in a closed system, the risk of re-infection is significantly diminished, thus the residual germ count in the end-product is lower and the shelf life is longer. Further, by using suitable production line the energy and labour costs can significantly be decreased.

### SUMMARY OF THE INVENTION

The invention relates to a continuous process for the preparation of post-heat treated cottage cheese products, in the course of which the basic material cottage cheese, mixed previously with flavouring substances, spices and optionally with other additives, is subjected to post-heat treatment at a temperature between 60 and 150°C, cooled to a temperature between 0 and 15°C, formed and coated. According to the process of the invention a homogeneous mixture is prepared from the cottage cheese, spices and other additives, the mixture is subjected to post-heat treatment by a continuous mode of operation in a closed system, then the mixture is cooled down, it is, if desired, formed, provided with coating,surface flavouring and decorative spicing, and packed.

### DETAILED DESCRIPTION

According to an advantageous embodiment of the invention the process is carried out in a production line ensuring a closed system technology. A homogeneous mixture is prepared from the basic material cottage cheese, spices and other additives. The mixture is introduced into a so-called premix tank by the aid of screw pump. This tank serves in the course of the continuous production also as a buffer. The mixture is forced from the premix tank into a heat exchanger by the aid of a pump corresponding to its consistency, where the mixture is subjected to post-heat treatment at a temperature between 75 and 85 °C. From this heat exchanger the mixture is forced through a pipeline into one or more series-connected additional heat exchanger, where it is cooled down to a temperature below 10°C. The cooled mixture is then forced through a pipeline, in closed system, into the last equipment finishing the technology, where, if desired, the product is formed, coated, decorated with spices and packed.

According to the process of the invention the cottage cheese used as basic material is made of curd by acidic or acidic/curdling method, the dry substance content of which is suitably between 20 and 50% by weight, or more, e.g. between 80 and 85% by weight.

As flavouring substances, a spice mixture generally applied in the case of sweet cottage cheese products can be used, or a spice mixture generally used in the case of salted cottage cheese and cheese products can be used. In the case of sweet cottage cheese products e.g. vanilla, lemon oil or other aroma substances can be applied. In the salted compositions e.g. seasoning paprika grist, garlic, onion in dried ground or pulped form, chives (Allium schoenoprasum), leek, (Allium porrum) e. g. in fine cut form, ground caraway, ground pepper and the like are generally used. The creation of a suitable spice mixture obviously does not mean a problem for a person skilled in this field.

The products of the invention can be decorated with different spices; the sweet products can be for example coated with chocolate or coloured sugar pearls; while the salted compositions can be coated with a mixture prepared from green spices or from the above-mentioned spices in the form of a roughly ground grist.

In the case of sweet products sugar and, if desired, artificial sweeteners can be used as an additive; common salt can be added to the salted compositions. Further, skim or fatty powdered milk, sour cream, cheese, butter or vegetable fats, e.g. hydrogenated vegetable oils, can be added to the composition. Consistency improving agents such as carrageens, modified starch, pectin and the like can also be added, which not only form the consistency of the product but also ensure the heat protection of the proteins. Besides, food supplements, such as mineral micro and macro elements and vitamins can be added. The flavouring of the product or the adjustment of its fat and dry substance content are not essential elements of the invention; a person skilled in the art can solve these problems without difficulty by carrying our preliminary experiments.

For mixing the basic materials an agitator exerting low shear force, favourably a single-armed agitator, can be used.

The post-heat treatment and suitably the subsequent cooling down are carried out in heat exchangers generally used in the food industry for the heat treatment of substances having a thick consistency. These equipments are provided with an instrument which ensure that the treated substance does not stick to the surface or does not bum in the course of the heat treatment. Such equipments are e.g. the votators, further the so-called Schröder combiners which follow the operating system of votators.

The duration of the post-heat treatment is not an essential element, the duration of heat treatment may vary from some seconds to 1 to 1.5 hours or more. The duration of the post-heat treatment depends on the temperature used as it is obvious for a person skilled in the art.

The advantage of the process of the invention is that
- aseptic circumstances can be assured by this closed system technology;
- by eliminating the risk of re-infection the shelf-life of the compositions is longer, preferably 30 days at least;
- the rheological properties of the product are more favourable in contrast to cottage cheese homogenized by high shear force;
- the labour and energy consumption can significantly be reduced compared with the batchwise system, thus the production costs are lower;
- the formation and packing of the cooled product and, if desired, its surface spicing/flavouring and the subsequent packing is made immediately, i.e. the chocolate coating solidifies immediately onto the surface and no re-infection can occur.

The process of the invention is elucidated in detail by the following examples without the intention of the limitation of the scope claimed.

### EXAMPLES

### Example 1

### Chocolate-coated cottage cheese rolls

Cottage cheese having a dry substance content of 35 to 45% by weight is mixed in a single-armed agitator with butter, sugar, skim milk powder, vegetable fat, a stabilizing agent and other flavouring substances. The mixture is forced into a premix tank by the aid of a screw pump. From this tank the mixture is forced into a votator by the aid of a suitable pump and kept at a temperature of 80°C for some minutes. Then the mixture is forced into another heat exchanger, preferably into another votator, and cooled below 10°C, afterwards it is transferred in a closed system into a forming equipment. The product is formed into bars and dipped into a chocolate bath, where the chocolate solidifies onto the cold surface. Thereafter the product is packed under cooling.

### Example 2

### Spicy cottage cheese paste

Semiskimmed, fatty or skim cottage cheese or cottage cheese paste is mixed with a curd having a fat content more than 12% by weight and having been previously acidified with lactobacteria, spices and a stabilizing agent. The mixture is heat-treated as described in Example 1, cooled, formed into blocks and packed or filled into tubes or jars.

### Example 3

### Spicy cottage cheese paste with cheese

A mixture consisting of ground semihard cheese, semiskimmed cottage cheese, sour cream having a fat content more than 12% by weight and a stabilizing agent is pulpified, mixed with run butter, common salt and spices and heat-treated as described in Example 1. The product is cooled and filled into tubes, hoses or jars.

### Example 4

### Spicy cottage cheese paste filled into salted wafer

Skim, semiskimmed or fatty cottage cheese is mixed with sour cream, butter, spices and a stabilizing agent and heat-treated as described in Example 1. Then the product is cooled down, filled into salted wafers and packed into boxes or foil.

### Example 5

### Cottage cheese rolls coated with decorative spices

The suitably flavoured, heat-treated, cooled and formed product is dipped into decorative spice and packed into transparent foil.

## Claims

1. A process for the preparation of post-heat treated cottage cheese products, in which cottage cheese is mixed with flavouring substances, spices and optionally other additives, post-heat treated at a temperature between 60 and 150°C, cooled to a temperature between 0 and 15°C, formed and coated, **characterized by** preparing a homogeneous mixture from cottage cheese, spices and other additives and subjecting the mixture to the following process steps in a closed system, in a continuous mode of operation:
- post-heat treatment,
- cooling,
- if desired, formation, coating, surface spicing, decorating with spices, and
- packing.

2. A process as claimed in claim 1, **characterized by** using a low shear force agitator for mixing the basic materials.

3. A process as claimed in claim 1 or 2, **characterized by** carrying out the post-heat treatment and cooling in a votator.

## Patentansprüche

1. Verfahren zur Herstellung nachträglich wärmebehandelter Quarkprodukte, in dessen Verlauf der Quark mit Geschmacksstoffen, Gewürzen und gegebenenfalls sonstigen Zusatzstoffen vermischt, bei 60-150 °C einer nachträglichen Wärmebehandlung unterzogen, auf eine Temperatur zwischen 0 °C und 15 °C gekühlt, geformt und mit einem Überzug versehen wird, ***dadurch gekennzeichnet,* dass** aus Quark, Gewürzen und sonstigen Zusatzstoffen ein homogenes Gemisch bereitet und das Gemisch in einem geschlossenen System in kontinuierlicher Betriebsweise den folgenden Arbeitsgängen unterzogen wird:
- nachträgliche Wärmebehandlung,
- Abkühlung,
- gewünschtenfalls Formung, Versehen mit einem Überzug, mit Oberflächenwürze, mit Gewürzdekoration, und
- Verpacken.

2. Verfahren nach Anspruch 1, ***dadurch gekennzeichnet,* dass** zum Vermischen der Grundstoffe eine Mischvorrichtung mit geringer Scherkraft verwendet wird.

3. Verfahren nach Anspruch 1 oder 2, ***dadurch gekennzeichnet,* dass** zur nachträglichen Wärmebehandlung und zur Kühlung ein Wärmeaustauscher mit Abstreifvorrichtung verwendet wird.

## Revendications

1. Procédé pour la préparation des produits en fromage blanc soumis d'un post-traitement thermique, selon lequel on mélange le fromage blanc avec une substance aromatisante, des épices et dans le cas échéant des autres additifs, on applique un post-traitement thermique à une température comprise entre 60° et 150°, on refroidit le produit à une température comprise entre 0° et 15°, on le forme et l'enrobe, **caractérisé en ce qu'**on prépare un mélange homogène à partir du fromage blanc, des épices et des autres additifs et, qu'on soumet le mélange dans un système fermé aux étapes suivantes d'un procédé en opération continue:
- un post-traitement thermique;
- refroidissement;
- dans le cas échéant: formage, enrobage, aromatisation de la surface, décoration avec épices; et
- emballage.

2. Procédé selon la revendication 1, **caractérisé en ce qu'**on utilise un malaxeur à force de cisaillement bas pour mélanger les matériaux de base.

3. Procédé selon la revendication 1 ou 2, **caractérisé en ce que** le post-traitement thermique et le refroidissement sont mis en oeuvre dans un votateur.
